# EUROPÄISCHE PATENTANMELDUNG

(11) **EP 1 801 420 A2**
(43) Veröffentlichungstag der Anmeldung: **27.06.2007**
(21) Anmeldenummer: 06026728.3
(22) Anmeldetag: 22.12.2006
(51) Int. Cl.: F04D 13/02, F04D 29/04

(54) **Kreiselpumpe mit permanentmagnetischer berührungsfreier Radialdrehkupplung**

(30) Priorität: 23.12.2005 DE 202005020288 U; 31.03.2006 DE 202006005189 U
(71) Anmelder: H. Wernert & Co. oHG, 45476 Mühlheim an der Ruhr (DE)
(72) Erfinder: Platt, Werner, 47137 Duisburg (DE)
(74) Vertreter: Schumacher, Horst

(57) **Zusammenfassung**

Bei einer Kreiselpumpe mit einem Gehäuse (11), einer berührungslosen, permanentmagnetischen koaxialen Drehkupplung (3, 5; 2, 6) zur Übertragung eines Antriebsmomentes in das Innere des Pumpengehäuses, einem Pumpen-Laufrad (14), das zusammen mit einem, Magnete (5 oder 6) tragenden Magnetrotor eine Baueinheit (Laufrad-Magnetrotor-Einheit 19) bildet, und mit einer radialen und einer axialen Lagerung der Laufrad-Magnetrotor-Einheit (19), weist die Drehkupplung ein radial inneres und ein radial äußeres Organ (2, 3) auf, die koaxial angeordnet sind, einander axial überlappen und im Bereich der axialen Überlappung (4) jeweils wenigstens zwei axial benachbarte Sätze Magnete (5, 6) tragen, welche mit abwechselnd radial einwärts und radial auswärts gerichteten Nordpolen entlang des jeweiligen Umfangs (7, 8) verteilt sind, wobei die Magnete (6) des radial inneren Organs (2) (antreibendes oder abtreibendes Organ) mit den Magneten (5) des radial äußeren Organs (3) (abtreibendes oder antreibendes Organ) zur Übertragung eines Drehmoments dazwischen jeweils paarweise (5a, 6a; 5b,6b) mit magnetlscher Anziehungskraft gekoppelt sind. Die magnetischen Wirklinien des antreibenden Teils der Drehkupplung weisen radial nach innen oder außen und die magnetischen Wirklinien des mit dem Pumpen-Laufrad (14) verbundenen Teils der Drehkupplung weisen radial nach außen oder innen. Um die Lagerung des Pumpen-Laufrades zu verbessern, dient die Drehkupplung zur axialen Lagerung der Laufrad-Magnetrotor Einheit (19), derart dass axial benachbarte Magnete (5a, 5b; 6a, 6b) am radial inneren sowie am radial äußeren Organ (2, 3) jeweils radial entgegengesetzt ausgerichtete Nordpole aufweisen und die Polwechsel in Axialrichtung eine berührungslos wirkende passive axiale Lagerung zur Aufnahme von Axialkräften zwischen den Organen (2, 3) bilden.

## Beschreibung

### GEBIET DER ERFINDUNG

Die Erfindung betrifft eine Kreiselpumpe mit einer permanent magnetischen berührungsfreien Radialdrehkupplung nach dem Oberbegriff des Anspruchs 1.

### TECHNOLOGISCHER HINTERGRUND

Die Kreiselpumpen mit Magnetkupplung stellen eine wichtige Art industriell verwendeter Maschinen zur Förderung von Flüssigkeiten dar. Gegenüber den einfacheren Kreiselpumpen mit Gleitringdichtung weisen sie den Vorteil einer hermetischen Abdichtung des Pumpenraumes auf. Dies lässt sie insbesondere zur Förderung aggressiver oder giftiger Flüssigkeiten günstig erscheinen.

In den meisten ausgeführten Fällen kommen koaxiale Drehkupplungen mit radialer Anordnung der Magnete und entsprechend radialen magnetischen Wirklinien zur Anwendung. Nur diese Bauart wird im Folgenden weiter betrachtet und ist auch Gegenstand der Anmeldung.

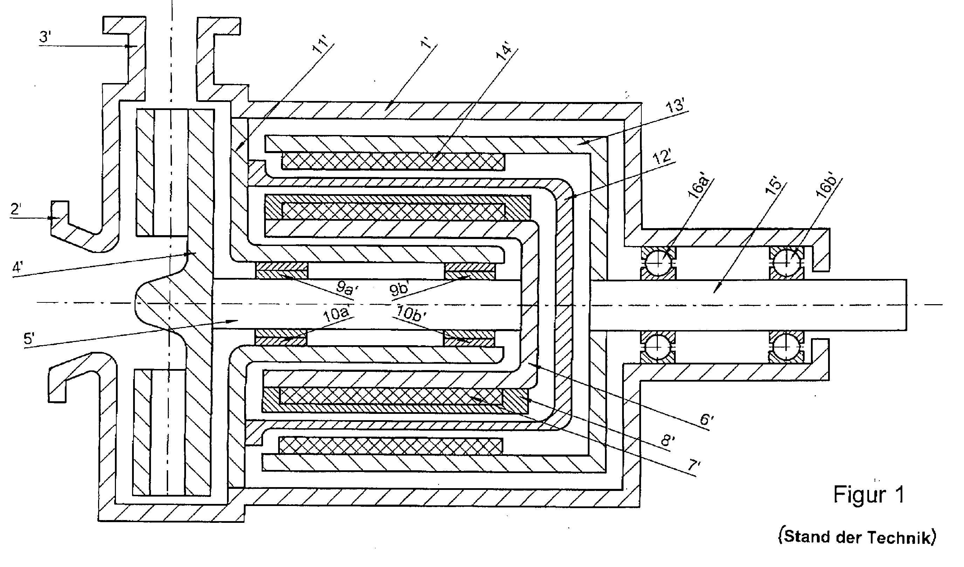

Der Hintergrund der Erfindung wird nachfolgend anhand von Figuren 1 bis 4 zu den nach dem Stand der Technik bekannten Lösungen erläutert.

Vorbemerkung 1: Alle Zeichnungen zeigen einen axialen Längsschnitt durch die Pumpe. Die dabei zumeist geschnittenen Rotationskörper wurden - mit der Ausnahme von Wellen - der Übersichtlichkeit halber ohne umlaufende Kanten dargestellt.

Vorbemerkung 2: Aus Gründen der Montierbarkeit und der verschiedenen verwendeten Werkstoffe muss das im nachfolgenden als Pumpengehäuse (1) bezeichnete Bauteil in der Praxis aus mehreren Teilen aufgebaut sein. Einige davon sind von der zu fördernden Flüssigkeit benetzt und müssen entsprechend abgedichtet sein, andere nicht. Aus Gründen der einfacheren Darstellung ist das Pumpengehäuse (1) hier jedoch einteilig dargestellt.

Eine erste bekannte Pumpe in üblicher Ausführung ist in Figur 1 dargestellt und wird z.B. in der Broschüre [1] beworben.

Im Pumpengehäuse (1') ist ein drehendes Pumpen-Laufrad (4') angeordnet, das die zu fördernde Flüssigkeit über den Saugstutzen (2') zugeführt bekommt und über den Druckstutzen (3') wieder unter Druckaufbau auswirft.

Die radiale Lagerung des Pumpen-Laufrades (4') erfolgt vermittels einer Laufradwelle (5') üblicherweise in Gleitlagern (9', 10'), deren feststehende Teile in einem Lagereinsatz (11') aufgenommen werden. Die Schmierung und Kühlung der Gleitlager (9'; 10') erfolgt durch die zu fördemde Flüssigkeit selbst.

Der Teil der Drehkupplung, der das antreibende Drehmoment durch eine Trennwand, die üblicherweise als dünnwandiger Spalttopf (12') ausgeführt wird, hindurch aufnimmt und über die Laufradwelle (5') an das Pumpen-Laufrad (4') weiterleitet, wird als Magnetrotor (6') bezeichnet. Dieser ist mit Permanentmagneten (7') bestückt, die wiederum vor dem korrosiven und evtl. auch abrasiven Angriff der Förderflüssigkeit mit einem zylinderförmigen Schutzmantel (8') flüssigkeitsdicht umgeben sein müssen. Es sei hier nur am Rande erwähnt, dass es erforderlich sein kann, einen etwa metallisch, sprich ferromagnetisch, ausgeführten Magnetrotor (6') auch vor Korrosion zu schützen ebenso wie die Welle (5').

Der Teil der Drehkupplung, der das antreibende Drehmoment des Motors über die Antriebswelle (15') aufnimmt und weitergibt, wird üblich als Magnettreiber (13') bezeichnet. Auch er ist entsprechend mit Permanentmagneten (14') bestückt, die jedoch in Luft drehen und daher keinem besonderen Angriff unterliegen. Die radiale und axiale Lagerung des Magnettreibers erfolgt in handelsüblichen Wälzlagem (16').

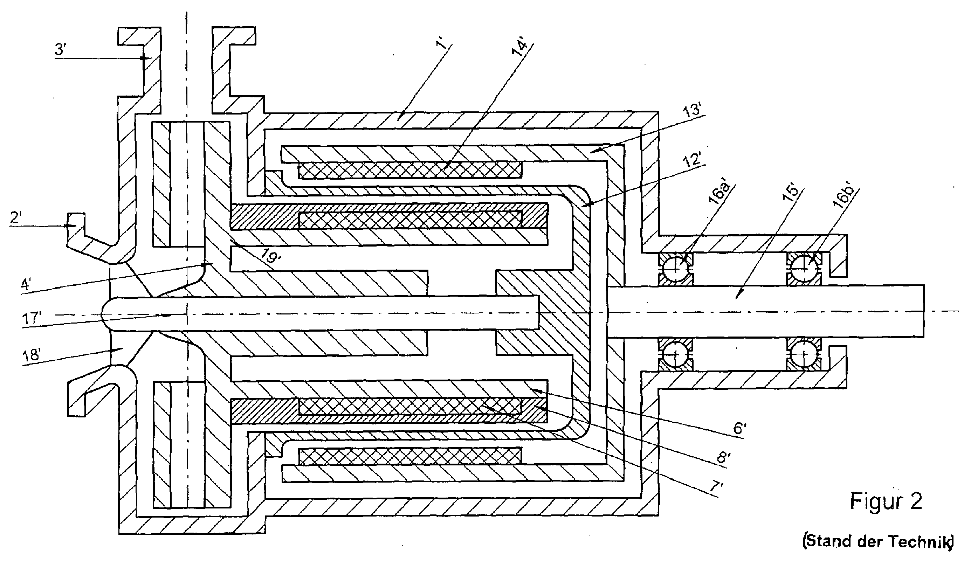

Eine weitere übliche Ausführung, insbesondere für kleinere Pumpen, zeigt Figur 2. Eine solche Pumpe wird z.B. in [2] beworben.

Bei dieser Konstruktion kann ein Lagereinsatz (11') kostengünstig entfallen. Das Pumpen-Laufrad (4') wird mit dem Magnetrotor (6'), den Permanentmagneten (7') und dem Schutzmantel (8') zu einem Teil zusammengefasst. Diese drehende Laufrad-Magnetrotor-Einheit (19') wird hier auf einer feststehenden Achse (17') gleitend gelagert. Die Achse (17') selbst wird auf der einen Seite über Strömungsrippen (18') im Saugstutzen (2') befestigt, auf der anderen Seite in dem speziell ausgeformten Spalttopf (12') abgestützt.

Die in Figur 1 und 2 beschriebene und heute weitgehend übliche Bauweise (hier als Bauart A bezeichnet) ist dadurch gekennzeichnet, dass der Magnettreiber (13') radial außen über dem weiter innen liegenden Magnetrotor (6') angeordnet ist. Diese Bauweise hat den Vorteil, dass das hohe Massenträgheitsmoment des außen gelegenen Magnettreibers (13') dem allzu schnellen Hochfahren des antreibenden Motors entgegenwirkt und somit das Abreißen der Magnetkupplung günstiger verhindert werden kann. Des Weiteren erleichtert diese Bauweise insbesondere eine großzügig axial beabstandete radiale Lagerung des Pumpen-Laufrades (4'), was aufgrund der hohen hydraulischen Kräfte innerhalb der Pumpe stets anzustreben ist.

Seltener werden hingegen Magnetkupplungspumpen mit einem radial außen gelegenen Magnetrotor (6'), der ja flüssigkeitsberührt ist, und einem innen liegendem Magnetreiber (13') ausgeführt. Diese Ausführung sei als Bauart B bezeichnet.

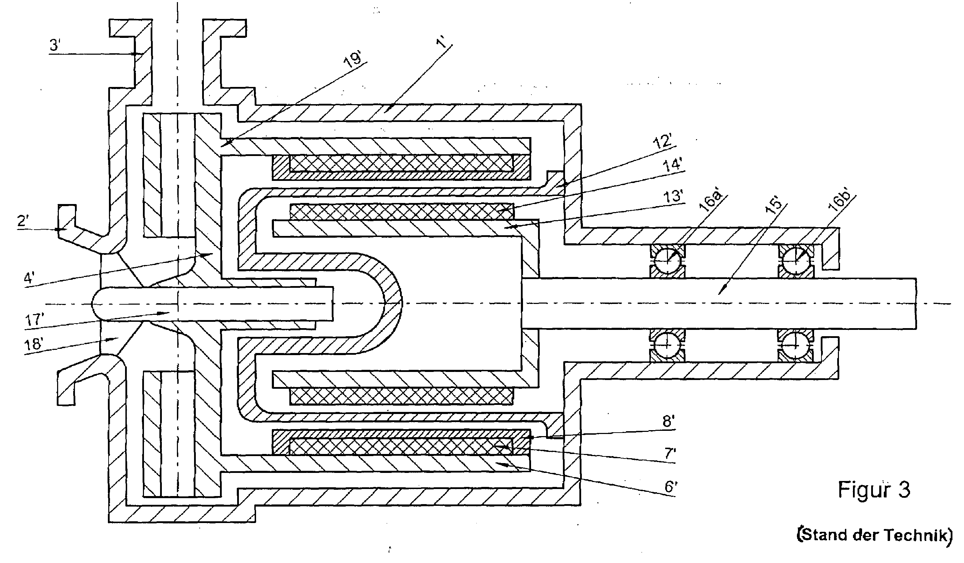

Solche Pumpen der Bauart B, die z.B. in der DE 01453760, EP 0171514 oder EP 0171515 beschrieben sind und in Figur 3 dargestellt sind, müssen sorgfältig so ausgelegt werden, dass beim schnellen Hochfahren die Magnetkupplung nicht abreißt, was hier aufgrund des außen liegenden Magnetrotors (6') droht. Des Weiteren behindert der radial innen liegende Magnettreiber (13') eine axial auseinander gezogene innen liegende Gleitlagerung des Laufrad-Magnetrotor-Einheit (19'), wenn nicht der Spalttopf (12'), der mit seiner eigentlichen Öffnung bei der Bauart B der Antriebsseite der Pumpe zugewandt sein muss, nachteilig recht verwunden ausgeführt wird. Eine ausgeführte Pumpe der Bauart B wird in [3] beworben und diente als Vorlage für die Figur 3. Dass hier im Gegensatz zur Konstruktion entspr. Figur 2 die Achse (17') ausschließlich durch die Strömungsrippen (18') festgehalten wird, hat bei der ausgeführten Pumpe den Vorteil eines durchgängig dünnwandigen Spalttopfes (12'), der nur mit dem Innendruck der Pumpe, jedoch nicht durch Lagerkräfte belastet wird.

Ein wichtiger Problembereich beim Betrieb der bisher vorgestellten Magnetpumpen, die also mit Gleitlagerungen versehen sind und das zu pumpende Medium selbst als deren Kühl- und Schmiermedium nutzen, ist das weitgehende oder völlige Ausbleiben eben dieser Flüssigkeit. Eine solche Mangelschmierung tritt dann auf, wenn sich höhere Gasanteile in der Flüssigkeit ansammeln, z.B. durch Kavitation vor der Pumpe, Trombeneintrag oder auch bei Schlürfbetrieb. Diese Gasanteile sammeln sich durch die Zentrifugalwirkung in der Pumpe in den radial innen gelegenen Hohlräumen des Pumpenkörpers an. Bei der herkömmlichen Bauweise It. Figuren 1 bis 3 befinden sich aber genau dort die Gleitlagerungen, die dann trocken fallen und dadurch häufig zerstört werden. Es sind daher viele Vorschläge gemacht worden, diesem Problem zu begegnen. Diese Lösungen bleiben jedoch oft der Tribologie der Reibpartner verhaftet - gepaart mit dem Versuch, die Reibleistung der Lager bei Mangelschmierung zu vermindern und somit die thermische Zerstörung zu vermeiden.

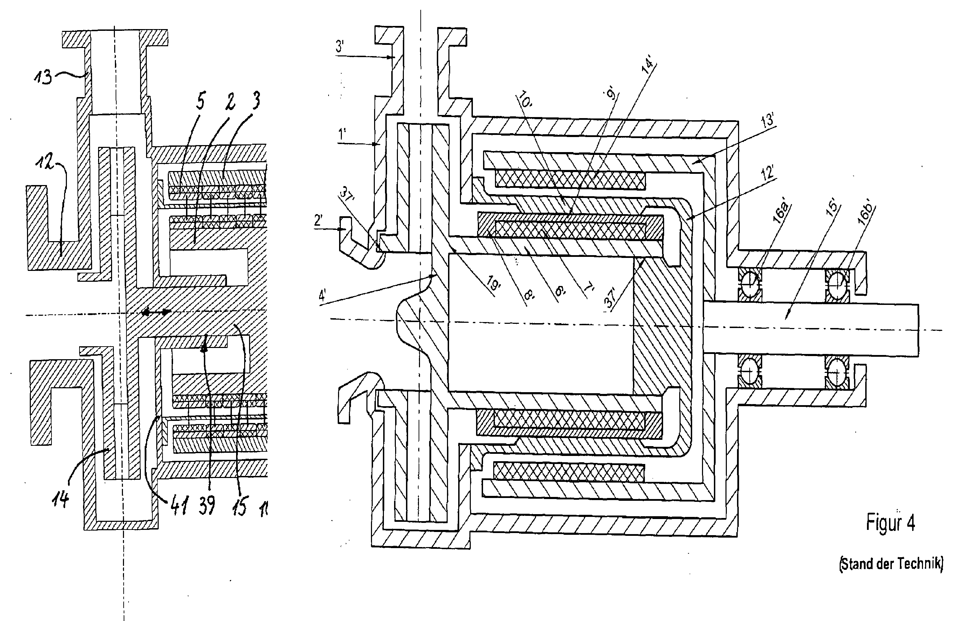

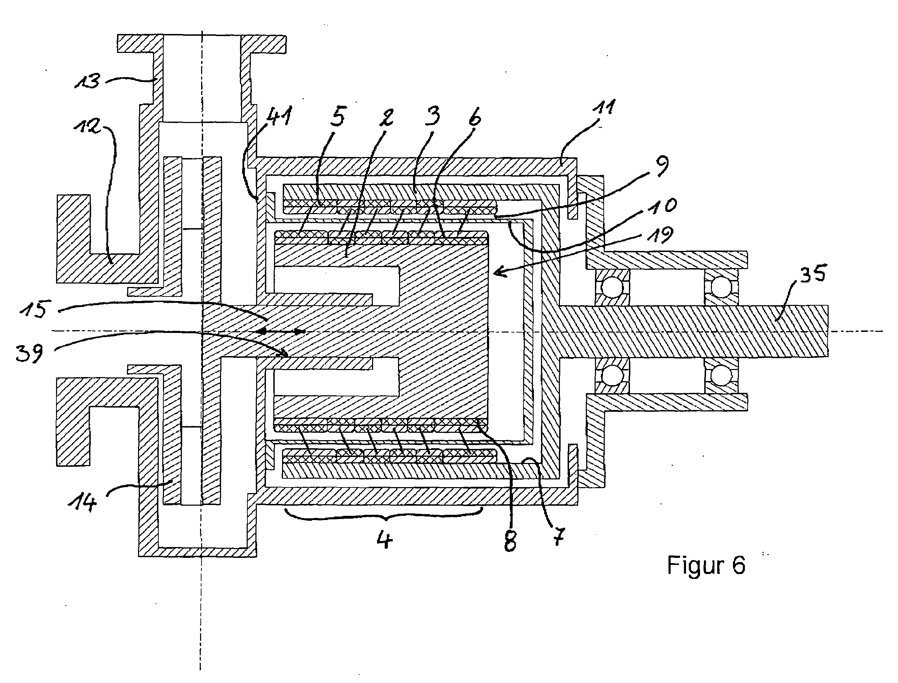

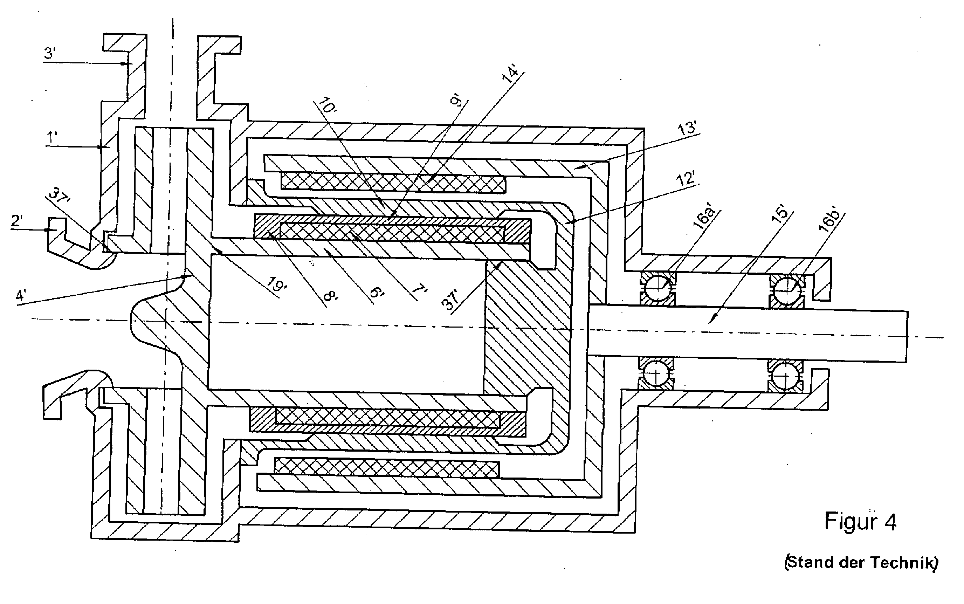

Einen technisch anderen und sehr sinnvollen Weg, nämlich die gefährdete Gleitlagerung radial möglichst weit nach außen zu verlegen, weist der Lösungsansatz einer "wellenlosen" Magnetpumpe wie in [4] beschrieben auf, welcher in Figur 4 dargestellt ist. Diese Konstruktion ist der Bauart A zuzuordnen. Es gelingt hier zu einer wellen- und achsenlosen Konstruktion zu gelangen, indem als feststehender Teil (10') der Gleitlagerung ein Abschnitt des Spalttopfes (12') verwendet wird und der rotierende Teil (9') der Gleitlagerung durch einen Abschnitt des Schutzmantels (8') gebildet wird. Das Pumpen-Laufrad (4') wird mit dem Magnetrotor (6'), den Permanentmagneten (7') und dem Schutzmantel (8') zu einem hohlen Laufrad-Magnetrotor-Einheit (19') verbunden.

Dennoch bleibt der Vorschlag aus [4] technisch beschränkt. So findet die radiale Gleitlagerung der Laufrad-Magnetrotor-Einheit (19') im Spalttopf (12') selbst statt, der aber gerade an dieser Stelle als sehr dünnwandiges Bauteil ausgeführt werden muss. Darauf wird auch in [4] hingewiesen und es kann dort daher auch nicht auf stabilere zusätzliche Anfahr- bzw. Notlager (37') verzichtet werden, die nachteilig teils immer noch durch den Spalttopf (12') gebildet werden müssen. Weiterhin gestattet die Abstützung der Lagerung im dünnwandigen Spalttopf keine äußere Kühlung oder einen einfachen äußeren Zugang, etwa zur Lagertemperaturüberwachung oder zur Zwangsspülung.

Es bleibt festzustellen, dass im Falle einer Betriebsstörung, z.B. bei Kavitation vor der Pumpe, Trombeneintrag oder auch bei Schlürfbetrieb, eine Kreiselpumpe mit deutlich erhöhten Gasanteilen in der zu fördernden Flüssigkeit beaufschlagt wird. Diese Gasanteile sammeln sich durch die Zentrifugalwirkung in der Pumpe in den radial innen gelegenen Hohlräumen des Pumpenkörpers an. Bei herkömmlich ausgeführten Magnetkupplungspumpen befinden sich dort die Gleitlagerungen, die dann trocken fallen und dadurch häufig zerstört werden.

Zur Übertragung von Drehmomenten durch geschlossene Wandungen hindurch sind z.B. aus Lehmann, "Eigenschaften und Auslegung von Magnetantrieben", in: "Leckagefreie Pumpen und Verdichter", Herausgeber G. Vetter, Vulkan-Verlag Essen, 2. Auflage, 1992, magnetische Radialdrehkupplungen bekannt. Diese umfassen ein antreibendes Organ, beispielsweise eine Welle, die entlang ihres Umfangs gleichverteilt Magnete mit abwechselnd radial einwärts und radial auswärts gerichtetem Nordpol trägt. Die Welle ist von einem abtreibenden Organ, beispielsweise einem Hohlzylinder, umgeben, der an seinem Innenumfang dieselbe Anzahl von ebenfalls radial abwechselnd magnetisierten Magneten trägt. Das antreibende und das abtreibende Organ können in ihrer Funktion auch vertauscht werden. Die Magnete der Welle und des Hohlzylinders sind paarweise durch anziehende Magnetkräfte gekoppelt, so dass bei Drehung des antreibenden Organs über die Magnetkopplung das angetriebene Organ mitgedreht wird. Hierbei können aus produktionstechnischen Gründen in Axialrichtung mehrere kleinere Magnete mit gleicher radialer magnetischer Ausrichtung benachbart zueinander angeordnet sein.

Zwar sind aus den EP 0 034 992 A1 und EP 0 512 516 A1 auch berührungslos wirkende permanentmagnetische Lager bekannt. Allerdings wirken dort radial magnetisierte mit axial magnetisierten Magneten zusammen (EP 0 034 992 A1), wodurch das übertragbare Drehmoment verringert wird, oder dort wirken axial magnetisierte mit in Umfangsrichtung magnetisierten Magneten zusammen. Zudem ist der dort beschriebene Aufbau mit ringförmigen Magneten teuer.

### DARSTELLUNG DER ERFINDUNG

Der Erfindung liegt daher die Aufgabe zugrunde, bei einer gattungsgemäßen Kreiselpumpe die Lagerung des Pumpen-Laufrades zu verbessern. Ein weiteres Ziel besteht darin, bei einer gattungsgemäßen Kreiselpumpe bei größtmöglicher magnetischer Kopplung zwischen dem Pumpen-Laufrad und dem antreibenden Organ eine verschleißfreie oder besonders verschließarme sowie einfach und kostengünstig herstellbare axiale Lagerung ohne zusätzliche Komponenten zu schaffen.

Diese Aufgabe wird entsprechend den Merkmalen des Anspruchs 1 gelöst.

Durch die Lösung nach Anspruch 1 wird eine Kreiselpumpe geschaffen, bei der Magnete von einem antreibenden Organ und dem Pumpen-Laufrad, die koaxial mit axialer Überlappung angeordnet sind, jeweils schachbrettartig mit in Umfangs- und Axialrichtung abwechselnd radial einwärts und radial auswärts gerichtetem Nordpol angeordnet sind. Die Übertragung des Drehmoments erfolgt durch paarweise magnetische Anziehung, während die Funktion einer axialen Lagerung des Pumpen-Laufrades durch Polwechsel in axialer Richtung erzeugt wird. Es wird so eine passive magnetische und damit verschleißfreie axiale Lagerung des Pumpen-Laufrades geschaffen, die ohne Komponenten, die nur der axialen Lagerung dienen, auskommen kann. Die Magnete tragen sowohl zur Übertragung des Drehmoments als auch zur axialen Lagerung bei. Das antreibende Organ der Kreiselpumpe wird auf andere Weise, insbesondere mechanisch, axial gelagert, um dort die axialen Kräfte weiterzugeben.

Günstig und den Effekt der axialen Steifigkeit noch verstärkend wirkt sich eine möglichst häufige Abwechslung der Polung pro Längeneinheit in axialer Richtung aus. Mit steigender Anzahl an Polwechseln ergeben sich durch Streuverluste jedoch auch immer kleinere übertragbare Drehmomente, was der Konstrukteur berücksichtigen muss. Das übertragbare Drehmoment und die Lagersteifigkeit stehen dabei in Wechselwirkung derart, dass ein höheres Drehmoment eine geringere Lagersteifigkeit bedingt und umgekehrt. Ein besonders wichtiger Bereich einer Konstruktion nach dieser neuartigen technischen Lehre ist daher ein Bereich, der bei gleicher Geometrie, gleicher Magnetmasse und gleichem Magnetwerkstoff wie bei der Anordnung nach Stand der Technik immer noch ein übertragbares Drehmoment zwischen 90% und 50% des maximal erreichbaren bewirkt. Dieser Bereich hat sich als optimal herausgestellt.

Zweckmäßigerweise sind die von den Organen getragenen Magnete axial voneinander beabstandet. Hierdurch können Befestigungsstege für eine einfache Montage verwendet werden.

Vorzugsweise ist eine Trennwand zwischen den Organen vorgesehen. Hierdurch können zwei Raumbereiche einer Pumpe oder dgl. hermetisch ohne verschleißbehaftete Wellendichtung oder dgl. dauerhaft und einfach voneinander getrennt werden. Ein Austritt Gefahr bringender Substanzen in die Umwelt wird damit sicher unterbunden.

Es ist sinnvoll, dass alle Magnete eines Organs dieselbe Geometrie haben. Hierdurch entfallen Produktions- und Vorhaltekosten für verschieden große Magnete. Zudem wird die Montage vereinfacht, da nicht zwischen verschiedenen Magneten unterschieden werden muss. Insgesamt ist die Radialdrehkupplung damit kostengünstiger herstellbar.

Zweckmäßigerweise ist mindestens ein Organ aus magnetisierbarem Material gebildet, wodurch die magnetische Wirkung der Magnete verstärkbar ist.

Gegebenenfalls ist an einem Organ eine Schutz- und/oder Haltevorrichtung insbesondere in Form einer die jeweiligen Magnete überdeckenden Hülse vorgesehen. Hierdurch kann ein Kontakt mit beispielsweise korrodierender Flüssigkeit unterbunden werden, wodurch die Magnete und deren Befestigung keiner Abnutzung unterliegen. Zudem ist ein sicherer Halt der Magnete am Organ gewährleistet und ein Ablösen eines Magnets, das zur Blockade der Kreiselpumpe führen kann, wird verhindert.

Die Schutz- und/oder Haltevorrichtung kann aus gegossener oder gepresster Formmasse, insbesondere aus Kunststoff, gebildet sein. Eine derartige Schutz- und/oder Haltevorrichtung ist einfach und kostengünstig mit üblichen Mitteln herstellbar.

Die vorgenannten sowie die beanspruchten und die in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstands der Erfindung ergeben sich aus den Unteransprüchen sowie aus der nachfolgenden Beschreibung.

Die Erfindung wird nachstehend anhand von in den beigefügten Abbildungen schematisiert dargestellten Ausführungsbeispielen näher erläutert.

### KURZBESCHREIBUNG DER FIGUREN

Fig. 1 bis 4 zeigen aus dem Stand der Technik bekannte Pumpen.
Fig. 5 zeigt eine erste Ausführungsform einer erfindungsgemäßen Kreiselpumpe im Axialschnitt - schematisiert.
Fig. 6 zeigt dieselbe Kreiselpumpe in einer axial ausgelenkten Position des Pumpen-Laufrades.
Fig. 7 zeigt eine zweite Ausführungsform einer Kreiselpumpe im Axialschnitt - schematisiert.
Fig. 8 zeigt dieselbe Kreiselpumpe in einer axial ausgelenkten Stellung des Pumpen-Laufrades.
Fig. 9 zeigt von einer Kreiselpumpe eine passiv magnetisch axial gelagerte magnetische Radialdrehkupplung im Längsschnitt.
Fig. 10 zeigt von einer Kreiselpumpe die Radialdrehkupplung der Fig. 9 im Querschnitt entlang der Linie A-A.
Fig. 11 zeigt eine perspektivische Ansicht der Organe ähnlich Fig. 9, jedoch mit einer größeren Anzahl von Magneten sowohl in Umfangsrichtung als auch in axialer Richtung.
Fig.12 illustriert den Feldlinienverlauf bei dynamischer Auslenkung in axialer Richtung der Radialdrehkupplung nach Fig. 9.
Fig. 13 zeigt von einer Kreiselpumpe eine weitere passiv magnetisch axial gelagerte magnetische Radialdrehkupplung im Längsschnitt.
Fig. 14, 15 und 16 zeigen von einer Kreiselpumpe jeweils weitere passiv magnetisch gelagerte magnetische Radialdrehkupplungen im Längsschnitt.

### DETAILIERTE BESCHREIBUNG DER FIGUREN

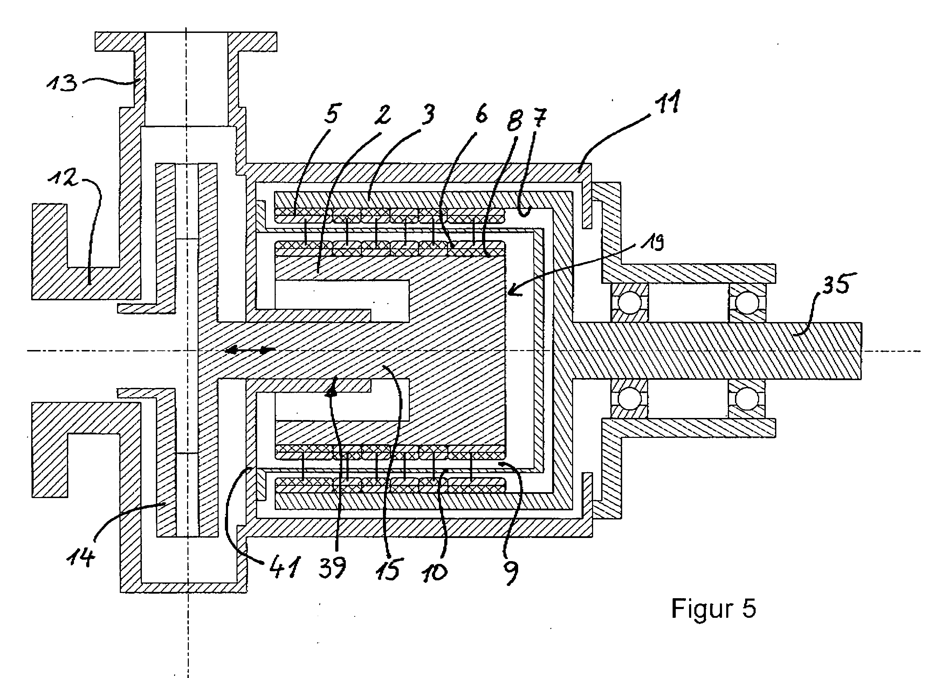

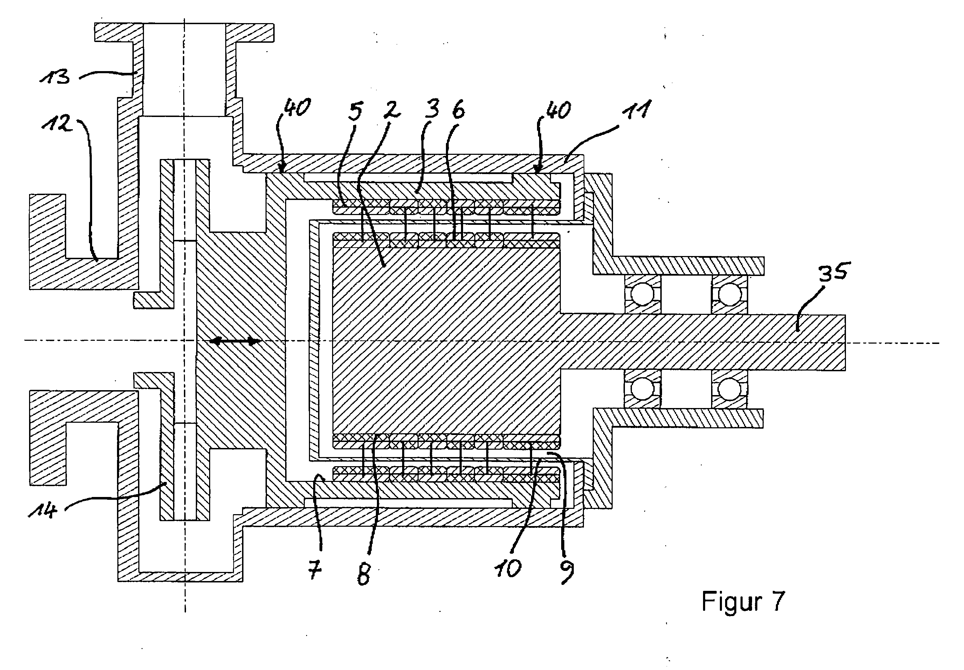

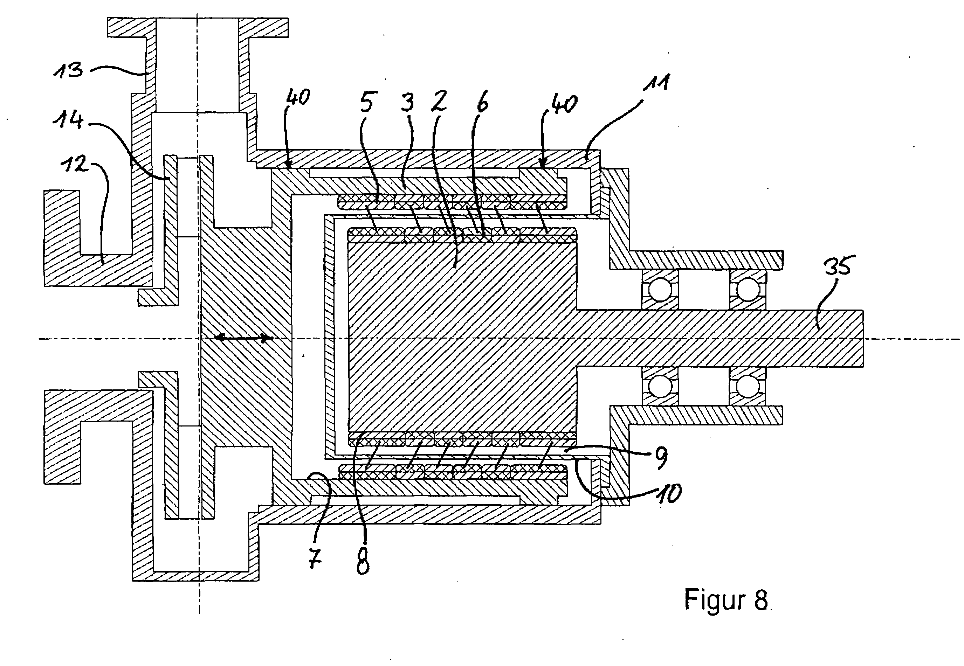

Bei den Ausführungsformen nach Figuren 5 bis 8 weist ein Pumpengehäuse 11 einen koaxial angeordneten Saugstutzen 12 und einen radial angeordneten Druckstutzen 13 auf. Zwischen dem Saugstutzen 12 und dem Druckstutzen 13 ist ein zum Saugstutzen 12 koaxial angeordnetes Pumpen-Laufrad 14 vorgesehen, welches (mechanisch) innerhalb der Pumpe lediglich radial gelagert ist, und zwar entweder achsnah mittels eines von einem Lagereinsatz 41 im Pumpengehäuse 11 gehaltenen kleinkalibrigen Gleitlagers 39 (Figuren 5 und 6) oder mittels eines topfförmigen großkalibrigen Gleitlagers 40 an der Innenseite des Pumpengehäuses 11 (Figuren 7 und 8). Das Pumpenlaufrad 14 wird durch eine indirekt am Pumpengehäuse 11 insbesondere wälzgelagerte Antriebswelle 35 drehangetrieben, wobei eine permanentmagnetische berührungsfreie Radialdrehkupplung die Drehantriebskraft auf das Pumpen-Laufrad überträgt und eine an dem Kupplungsspalt 9 vorgesehene Trennwand 10 in Form eines an sich bekannten so genannten Spalttopfes die Antriebsseite von der Abtriebsseite medienmäßig trennt.

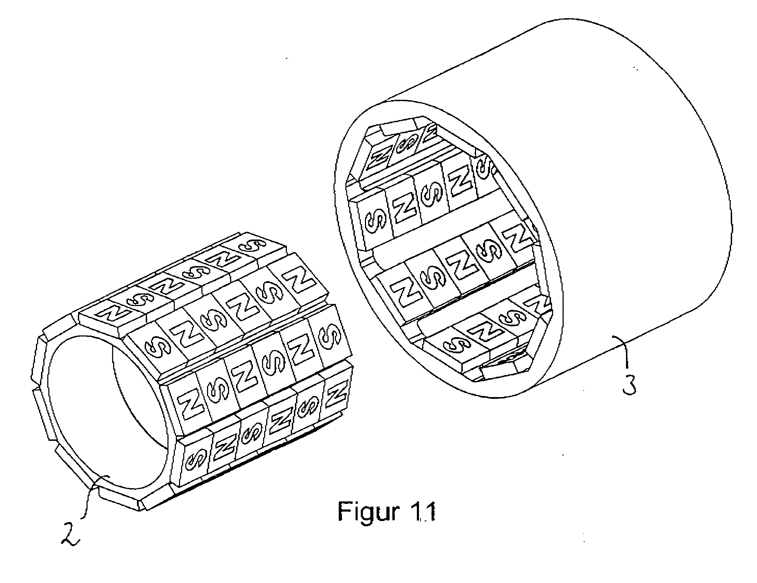

Die Antriebswelle 35 ist gemäß Fig. 5 und 6 mit einem topfförmigen Antriebsrotor (äußeres Organ 3) drehfest verbunden, während das Pumpen-Laufrad 14 mit einem etwa topfförmigen Abtriebsrotor (inneres Organ 2) drehfest verbunden ist. (Das Pumpen-Laufrad 14 bildet also zusammen mit einem Magnete (5, 6) tragenden Magnetrotor, hier dem Abtriebsrotor, eine Baueinheit (Laufrad-Magnetrotor-Einheit 19), die sowohl einteilig als auch vielteilig zusammengesetzt sein kann.) Am inneren Umfang 7 des Organs 3 sind Permanentmagnete 5 über den Umfang verteilt angeordnet, wobei die Polausrichtung radial ist und sich die Polungen axial benachbarter und umfangsmäßig benachbarter Magnete jeweils abwechseln - wie aus Figur 11 prinzipiell ersichtlich. Den äußeren Magneten 5 stehen innere Magnete 6 am äußeren Umfang 8 des inneren Organs 2 gegenüber, wo sie mit radialer Polungsausrichtung in gleicher Stückzahl und Anordnung wie am äußeren Organ 3 geeignet befestigt sind. Auch hier sind die Polungen axial benachbarter Magnete und die Polungen von auf einem Umfang benachbarten Magneten ungleichnamig wie in Figur 11 prinzipiell dargestellt. Zwischen den Nordpolen (kreuzschraffiert) und den Südpolen (einfachschraffiert) sind die den Spalt 9 überbrückenden Magnetwirklinien als fette radiale Striche angedeutet (Fig. 5 bis 8).

Wie aus Figur 5 ersichtlich, stehen sich die Magnetpaarungen des inneren und äußeren Organs - axial - genau gegenüber, wenn sich das Pumpenlaufrad 14 in seiner axialen Solllage befindet. Da das Pumpenlaufrad lediglich radial, nämlich durch das innen liegende Gleitlager 39, nicht aber axial gelagert ist, führen Druck- oder Saugstöße am Pumpenlaufrad zu dessen axialer Auslenkung. In Figur 6 ist eine Auslenkung in Richtung auf den Saugstutzen dargestellt. In Folge dieser axialen Auslenkung bilden sich an den gegenüberstehenden Magnetpaarungen des äußeren und inneren Organs axial gerichtete magnetische Richtkräfte aus, die durch Schrägstellen der Wirklinien zeichnerisch angedeutet sind und die jeweils im Sinne einer Rückstellung des Pumpenlaufrades auf die in Figur 5 dargestellte Solllage orientiert sind. - Entsprechendes gilt für das Ausführungsbeispiel nach Figuren 7 und 8, wobei das äußere Organ 3 bei diesem Ausführungsbeispiel mit dem Pumpenlaufrad und das innere Organ 2 mit der Antriebswelle 35 drehfest verbunden ist. Es versteht sich, dass in beiden Ausführungsbeispielen davon ausgegangen wird, dass die axiale Beweglichkeit der Antriebswelle 35 im Vergleich zur axialen Beweglichkeit des Pumpenlaufrades 14 durch Vorsehen entsprechender und an sich bekannter Axiallager für die Antriebswelle eingeschränkt ist.

Bei dem Ausführungsbeispiel nach Figuren 7 und 8 ergibt sich der besondere Vorteil, dass die Gleitlagerung 40 des Pumpenlaufrades 14 den maximal möglichen Wirkdurchmesser hat und daher die Gleitung besonders gut ist. Außerdem ist hier die Trockenlaufeigenschaft der Pumpe erheblich verbessert, weil selbst geringe Restmengen an Pumpfilüssigkeit das gehäuseseitige Gleitlager 40 ausreichend kühlen und auch über die Pumpengehäusewand eine zusätzliche Lagerkühlung erfolgt.

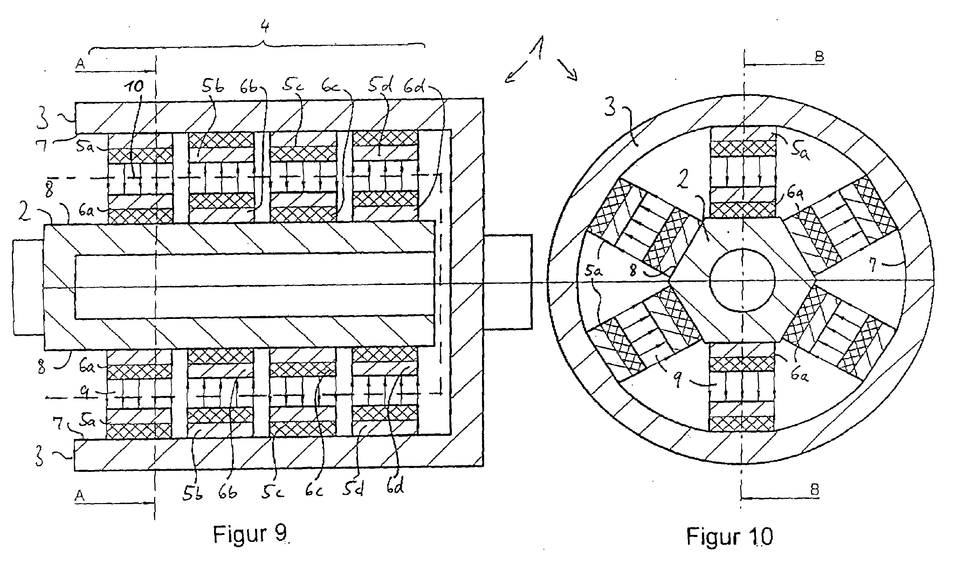

Die verschiedenen Möglichkeiten des Aufbaus der magnetischen Axiallagerung für das Pumpenlaufrad sind anhand der folgenden Figuren 9 bis 16 näher erläutert:

Die in Fig. 9 und 10 dargestellte Radialdrehkupplung für eine Kreiselpumpe oder dgl. umfasst ein antreibendes (oder - wahlweise - angetriebenes) Organ 2, hier eine stimseitig an einen Motor od. dgl. koppelbare Hohlwelle, und ein angetriebenes (oder - wahlweise - antreibendes) Organ 3, hier ein Hohlzylinder mit einem stimseitigen Anschluss für ein Laufrad einer Kreiselpumpe oder dgl. Die koaxial angeordneten Organe 2, 3 überlappen einander axial. Im Bereich der axialen Überlappung 4 trägt jedes Organ 2, 3 beispielsweise vier axial benachbarte Sätze einander radial gegenüberliegender Magnete 5a, 5b, 5c, 5d bzw. 6a, 6b, 6c, 6d. Die Magnete 5 sind dabei entlang des inneren Umfangs 7 des Organs 3 angeordnet, während die Magnete 6 entlang des äußeren Umfangs 8 des Organs 2 angeordnet sind. Entlang des jeweiligen Umfangs 7, 8 und in axialer Richtung weisen die Magnete 5, 6 abwechselnd radial einwärts und radial auswärts gerichtete Nordpole auf, die in den Fig. kreuzschraffiert dargestellt sind. Zweckmäßigerweise tragen die Organe 2, 3 dieselbe Anzahl insbesondere gleich beabstandeter Magnete 5, 6, so dass diese paarweise durch magnetische Anziehungskraft gekoppelt sind und ein Drehmoment vom antreibenden Organ 2 auf das angetriebene Organ 3 schlupffrei übertragbar ist. Die Anordnung der Magnete 6 ist in Fig. 11 veranschaulicht.

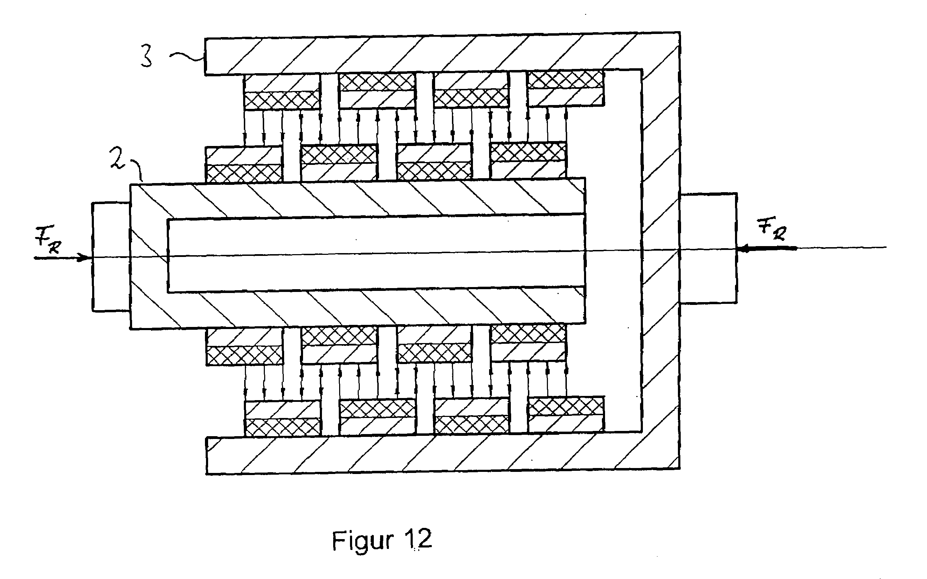

Die dargestellte magnetische Radialdrehkupplung weist zudem eine berührungslose passive, d.h. regelungslose, magnetische axiale Lagerung auf. Eine axiale Rückstellkraft wirkt infolge der Polwechsel in axialer Richtung einer relativen axialen Auslenkung der Organe 2, 3 entgegen. Der Feldlinienverlauf bei Auslenkung in axialer Richtung ist in Fig. 12 illustriert. Die axiale Rückstellkraft ist umso größer, je stärker die relative axiale Auslenkung ist. Das Organ 2 ist dadurch axial relativ zum Organ 3 gelagert, und zwar in einem stabilen Gleichgewicht. Axialkräfte können so aufgenommen werden. Die dargestellte Anordnung stellt damit eine berührungslose axiale Lagerung dar.

Die Lagersteifigkeit der axialen Lagerung und das zwischen den Organen 2, 3 übertragbare Drehmoment stehen dabei wie folgt in Wechselwirkung. Die axiale Rückstellkraft und somit die Lagersteifigkeit steigt mit der Anzahl der Polwechsel in Axialrichtung pro Längeneinheit. Mit steigender Anzahl von Polwechseln erhöhen sich jedoch auch Streuverluste, so dass das zwischen den Organen 2, 3 übertragbare Drehmoment kleiner wird. Das übertragbare Drehmoment steigt also mit abnehmender Anzahl von Polwechseln in Axialrichtung und zudem mit steigender Länge der Magnete 5, 6 in Axialrichtung.

Die optimale Anzahl von axialen Polwechseln pro Längeneinheit und die optimale Länge der Magnete 5, 6 in Axialrichtung ist daher abhängig von den jeweiligen Anforderungen an die zu übertragenden Drehmomente und die Lagersteifigkeit beispielsweise empirisch zu ermitteln. Vorteilhafterweise wird ein Bereich zwischen 50% und 90% des ohne axialen Polwechsel bei gleicher Geometrie, gleicher Magnetmasse und gleichem Magnetwerkstoff übertragbaren Drehmoments gewählt. In dem in Fig. 9 dargestellten Beispiel beträgt das übertragbare Drehmoment etwa 80% des ohne axialen Polwechsel übertragbaren Drehmoments.

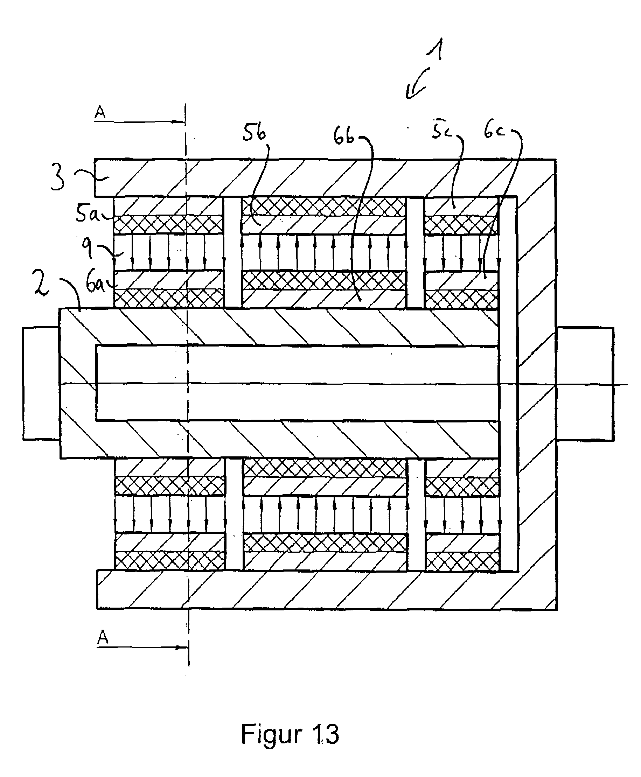

Die Magnete 5, 6 sind Permanentmagnete, können antriebsseitig ggf. aber auch Elektromagnete sein, ohne dass dadurch der Gegenstand der Erfindung verlassen wird. Aus Kostengründen sind die Magnete 5 bzw. 6, wie in Fig. 9 bis 12 dargestellt, vorzugsweise jeweils von gleicher Geometrie. Die Dimension in Axial-, Radial- und/oder Umfangsrichtung kann jedoch auch wie in Fig. 13 beispielhaft für die Axialrichtung dargestellt zwischen den Sätzen variieren, damit die Axiallager- und Drehmomentübertragungseigenschaften optimal an die jeweiligen Anforderungen anpassbar sind.

Der axiale Abstand zwischen axial benachbarten Sätzen von Magneten 5, 6 ist entsprechend den Anforderungen variierbar. Herstellungsbedingt können nicht dargestellte Haltestege zwischen den Magneten 5, 6 vorgesehen sein, so dass diese wie dargestellt in Axial- und/oder Umfangsrichtung voneinander beabstandet sind. Die Magnete 5, 6 können jedoch auch insbesondere in Axialrichtung aneinander angrenzen und mit den jeweiligen Organen 2, 3, die zur Verstärkung der magnetischen Wirkung ganz oder teilweise aus magnetisierbarem Material gebildet sein können, verklebt, in diese insbesondere klemmend eingesetzt und/oder anderweitig fest mit diesen verbunden sein. Insbesondere können sie von einer Halte- und Schutzvorrichtung, beispielsweise einer die Magnete 5 und/oder 6 übergreifenden Hülse gehalten und vor Flüssigkeiten, Gasen oder dgl. geschützt werden. Die Schutzvorrichtung kann aus gegossener oder gepresster Formmasse wie etwa Kunststoff gebildet sein.

Die radiale Dimension der Magnete 5, 6 wird in Abhängigkeit des Innendurchmessers des Organs 3 und des Außendurchmessers des Organs 2 so gewählt, dass zwischen einander radial gegenüberliegenden Magneten 5, 6 ein möglichst kleiner Spalt 9 in radialer Richtung verbleibt. Durch den Spalt 9 und entlang des Bodens des hier hohlzylinderförmigen Organs 3 kann sich eine gestrichelt angedeutet dargestellte Trennwand 10 (Fig. 9) topfzylinderförmig erstrecken. Die Trennwand - auch als Spalttopf bezeichnet) kann einen mit Flüssigkeit oder dgl. in Berührung kommenden, das angetriebene Organ 3 umfassenden Raumbereich gegenüber einem trockenen und das antreibende Organ 2 umfassenden Raumbereich abtrennen, wie in einer Kreiselpumpe.

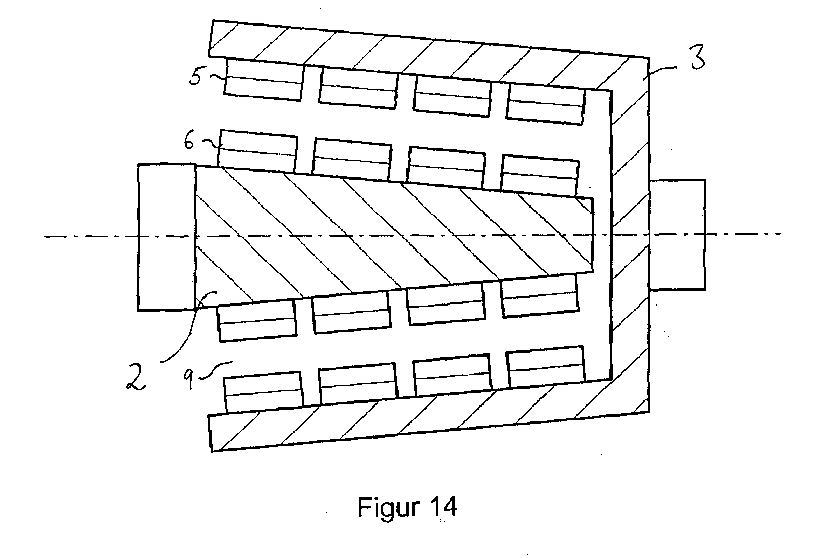

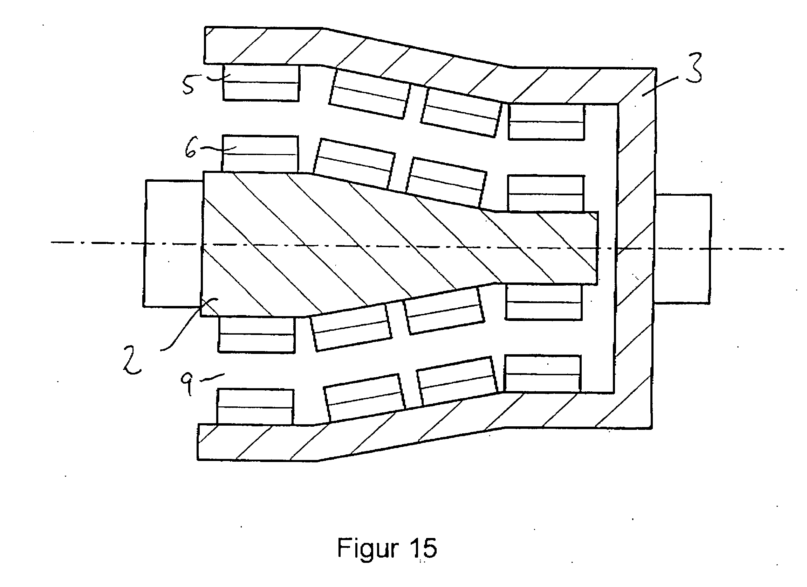

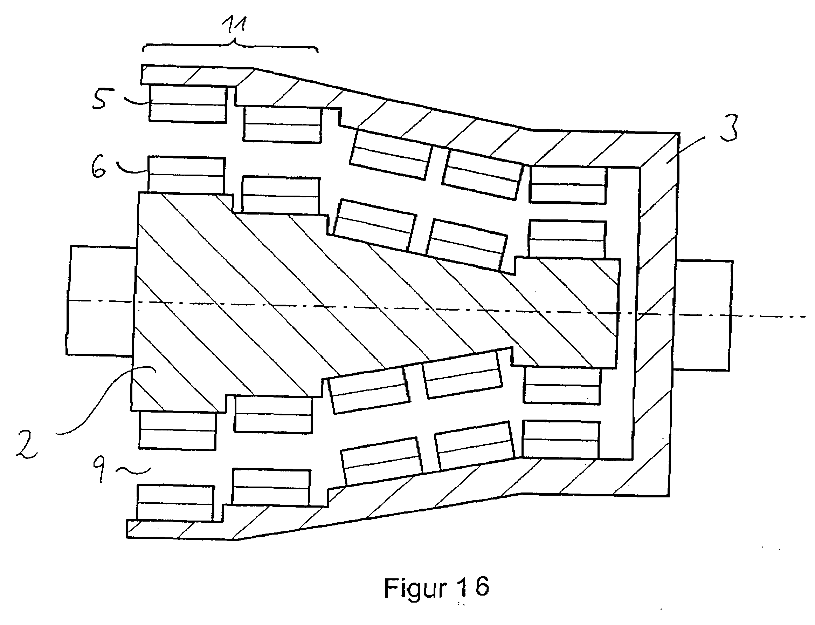

Die Funktion der Organe 2, 3 kann auch vertauscht sein, so dass das Organ 3 antreibt und das Organ 2 angetrieben wird. Zudem ist die geometrische Form nicht auf einen Hohlzylinder mit darin befindlicher Hohlwelle beschränkt. Beispielsweise können die Organe 2, 3 auch kegelig ausgebildet sein, vgl. Fig. 14. Es kann auch vorgesehen sein, dass sich die Organe 2, 3 zwischen zwei zylindrischen Abschnitten mit verschiedenen Durchmessern konisch verjüngen, vgl. Fig. 15. Gegebenenfalls kann ein sich stufig verjüngender Abschnitt 10 vorgesehen sein, vgl. Fig. 16. Konische, zylindrische, stufige und/oder gegebenenfalls weitere Abschnitte können beliebig kombiniert werden, um beispielsweise geometrische Vorgaben durch die Pumpe oder an die Organe 2, 3 anschließbare Komponenten der Pumpe zu erfüllen. Hierbei ist darauf zu achten, dass die axiale Lagersteifigkeit ausreichend hoch ist, damit die Organe 2, 3 bzw. deren Magnete 5, 6 im Bereich einer Verjüngung nicht aneinander stoßen.

### BEZUGSZEICHENLISTE

- 1: Kreiselpumpe
- 2: inneres Organ
- 3: äußeres Organ
- 4: axiale Überlappung
- 5: äußere Magnete
- 5a-d: Magnete
- 6: innere Magnete
- 6a-d: Magnete
- 7: innerer Umfang
- 8: äußerer Umfang
- 9: Spalt
- 10: Trennwand
- 11: Pumpengehäuse
- 12: Saugstutzen
- 13: Druckstutzen
- 14: Pumpenlaufrad
- 15: Laufradwelle
- 19: Laufrad-Magnetrotor-Einheit
- 35: Antriebswelle
- 39: Gleitlager
- 40: Gleitlager
- 41: Lagereinsatz

### LITERATUR

[1]
   Broschüre der Firma WERNERT-PUMPEN GMBH D-45476 Mülheim an der Ruhr Chemienormpumpe aus Kunststoff mit Magnetkupplung - Typenreihe NM Ausgabe 687/02
[2]
   Broschüre der Firma IWAKI Pumpen Iwaki magnetgetriebene Pumpen - Serie MDM printed in Japan 99.11.ITN
[3]
   Broschüre der Firma CP-Pumpen AG CH-4800 Zofingen: Magnetkupplungspumpe MKP, metallisch
[4]
   Robert Neumaier: Hermetische Pumpen Verlag und Bildarchiv W.H. Faragallah, 1994 ISBN-3-929682-05-2 Kapitel 3.7.12 Wellenlose Magnetkupplungs-Kreiselpumpen S. 356 ff

## Patentansprüche

1. Kreiselpumpe
- mit einem Gehäuse (11),
- mit einer berührungslosen, permanentmagnetischen koaxialen Drehkupplung (3, 5; 2, 6) zur Übertragung eines Antriebsmomentes in das Innere des Pumpengehäuses ,
- mit einem Pumpen-Laufrad (14), das zusammen mit einem Magnete (5 oder 6) tragenden Magnetrotor eine Baueinheit (Laufrad-Magnetrotor-Einheit 19) bildet,
- mit einer radialen und einer axialen Lagerung der Laufrad-Magnetrotor-Einheit (19),
- bei der die Drehkupplung ein radial inneres und ein radial äußeres Organ (2, 3) aufweist, die koaxial angeordnet sind, einander axial überlappen und im Bereich der axialen Überlappung (4) jeweils wenigstens zwei axial benachbarte Sätze Magnete (5, 6) tragen, welche mit abwechselnd radial einwärts und radial auswärts gerichteten Nordpolen entlang des jeweiligen Umfangs (7, 8) verteilt sind, wobei die Magnete (6) des radial inneren Organs (2) (antreibendes oder abtreibendes Organ) mit den Magneten (5) des radial äußeren Organs (3) (abtreibendes oder antreibendes Organ) zur Übertragung eines Drehmoments dazwischen jeweils paarweise (5a, 6a; 5b,6b) mit magnetischer Anziehungskraft gekoppelt sind und
- bei der die magnetischen Wirklinien des antreibenden Teils der Drehkupplung radial nach innen oder außen weisen und die magnetischen Wirklinien des mit dem Pumpen-Laufrad (14) verbundenen Teils der Drehkupplung radial nach außen oder innen weisen,
**dadurch gekennzeichnet, dass**
zur axialen Lagerung der Laufrad-Magnetrotor-Einheit. (19) die Drehkupplung dient, wobei
axial benachbarte Magnete (5a, 5b; 6a, 6b) am radial inneren sowie am radial äußeren Organ (2, 3) jeweils radial entgegengesetzt ausgerichtete Nordpole aufweisen und die Polwechsel in Axialrichtung eine berührungslos wirkende passive axiale Lagerung zur Aufnahme von Axialkräften zwischen den Organen (2, 3) bilden.

2. Kreiselpumpe nach Anspruch 1, **dadurch gekennzeichnet, dass** das übertragbare Drehmoment zwischen 50% und 90% des ohne axiale Polwechsel übertragbaren Drehmoments beträgt.

3. Kreiselpumpe nach Anspruch 1 oder 2, **dadurch gekennzeichnet, dass** die Magnete axial benachbarter Magnetreihen axial voneinander beabstandet sind.

4. Kreiselpumpe nach einem der Ansprüche 1 bis 3, **dadurch gekennzeichnet, dass** eine Trennwand zwischen den Organen (2, 3) vorgesehen ist.

5. Kreiselpumpe nach einem der Ansprüche 1 bis 4, **dadurch gekennzeichnet, dass** die Magnete (5, 6) jeweils identische Geometrien aufweisen.

6. Kreiselpumpe nach einem der Ansprüche 1 bis 5, **dadurch gekennzeichnet, dass** ein Organ (2, 3) aus magnetisierbarem Material gebildet ist.

7. Radialdrehkupplung nach einem der Ansprüche 1 bis 6, **dadurch gekennzeichnet, dass** an einem Organ (2, 3) eine Schutz- und/oder Haltevorrichtung für die jeweiligen Magnete (5; 6) vorgesehen ist.

8. Radialdrehkupplung nach Anspruch 7, **dadurch gekennzeichnet, dass** die Schutz- und/oder Haltevorrichtung eine die jeweiligen Magnete (5; 6) überdeckende Hülse ist.

9. Kreiselpumpe nach Anspruch 7, **dadurch gekennzeichnet, dass** die Schutz- und/oder Haltevorrichtung aus gegossener oder gepresster Formmasse, insbesondere aus Kunststoff, gebildet ist.
